Europäisches Patentamt

European Patent Office

Office européen des brevets

(19)

(11) Publication number: **0 191 865**

**A1**

## EUROPEAN PATENT APPLICATION

published in accordance with Art. 158(3) EPC

(21) Application number: 85903714.5

(22) Date of filing: 29.07.85

Data of the international application taken as a basis:

(86) International application number:
PCT/JP85/00427

(87) International publication number:
WO86/01013 (13.02.86 86/04)

(51) Int. Cl.⁴: **G 05 B 19/02**

(30) Priority: 31.07.84 JP 161208/84

(43) Date of publication of application:
27.08.86 Bulletin 86/35

(84) Designated Contracting States:
FR

(71) Applicant: **KOGANEI LTD.**
**2-3, Marunouchi 3-chome, Chiyoda-ku**
**Tokyo 100(JP)**

(72) Inventor: **MAEDA, Masao**
**Koganei Ltd. 2-3, Marunouchi 3-chome Chiyoda-ku**
**Tokyo 100(JP)**

(74) Representative: **Netter, André et al,**
**Cabinet NETTER 40, rue Vignon**
**F-75009 Paris(FR)**

(54) **SEQUENCE CONTROL ELEMENT AND A SEQUENCE CONTROLLER USING SAID ELEMENT.**

(57) A sequence control element comprising a circuit board (23) on which is formed a basic circuit (23b) for sequence control, a relay element (25) that can be detachably connected to the basic circuit, and connectors (23c,23d) that can be connected to the basic circuit and that can also be detachably connected to other sequence control elements, and a sequence controller using said element. The sequence controller is formed by detachably connecting a plurality of sequence control elements which can be attached to or removed from a mounting rail (21) via connectors in single movement. Different sequence control elements can be constituted by simply replacing the circuit board on which a predetermined basic circuit is formed.

*FIG. 1*

TITLE OF THE INVENTION

        SEQUENCE CONTROL ELEMENT AND A SEQUENCE CONTROLLER

        USING SAID ELEMENT


TECHNICAL FIELD

        This invention relates to a sequence control technique, and more particularly to a module type sequence control technique effective in the application to sequence control of various automatic processing machines and the like.


BACKGROUND ART

        In recent years, there have been used various sequence control methods for automatically performing carry-in, carry-out, conveying, press working, drill working and the like of works in the automatic processing machines such for example as a press machine and a drilling machine.

        One of the above-described sequence control methods uses relay circuits, which,  however, presents such disadvantages that wire-connecting between sand assembling of relays are complicated and difficult, designing and manufacturing of circuits require high levels of knowledge of circuitry and skill, and it takes much time, whereby causing costs to increase.

- 1 -

Furthermore, as another sequence control method, there is one using a programmable controller.

The sequence control method of this type requires high costs and uses unit structure having the predetermined number of input and output terminals, whereby excess or deficiency occurs as compared to the request and, in case of excess, unused terminal or terminals remain, while, in case of deficiency, a certain number of units should be added. Moreover, in case of a trouble, the only way to overcome the trouble is that the troubled unit as a whole should be replaced by a new one, thus further increasing the costs. Furthermore, considerable knowledges of circuitry, of programming language and man-hours are required for designing and manufacturing of the circuits and programs. Further, the programmable controller method is sensitive to electric clutter and interference.

An object of the present invention is to provide a sequence control technique, wherein it takes only to couple control elements to each other to connect input and output terminals to each other without requiring any special knowledge of circuitry and high skill level.

Another object of the present invention is to provide a sequence control technique, wherein costs are generally low, there is no waste in the number of input and output terminals and the cost per output can be decreased.

- 2 -

0191865

A further object of the present invention is to provide a sequence control technique, wherein predetermined circuit boards are selected, so that the desired sequence control elements of various types can be formed through the utilization of standard type relay elements on the market, with a main body of socket being commonly used, and, a plurality of elements are connected to each other in single movement, so that a desired sequence controller can be obtained in a short time.

DESCLOSURE OF INVENTION

The present invention contemplates that circuit boards each formed therein with a basic circuit for a predetermined sequence control are provided, and, only a replacement of a circuit board makes it possible to obtain a desired sequence control elememt.

Furthermore, the present invention contemplates that only the connection of the sequence control elements to each other in single movement makes it possible to form a desired sequence controller.

BRIEF DESCRIPTION OF DRAWINGS

Fig. 1 is a perspective view showing one embodiment of a mono-module type sequence control element according to the present invention;

Fig. 2 is a perspective view showing the essential

- 3 -

portions thereof;

Fig. 3 is an enlarged plan view showing the circuit board thereof;

Fig. 4 is a circuit diagram showing the principle of the mono-module type sequence control element according to the present invention;

Fig. 5 is a circuit diagram showing the principle of operation of one embodiment of the sequence controller using the sequence control elements shown in Fig. 4 according to the present invention;

Figs. 6 to 11 are views showing examples of various circuits of the mono-module type sequence control elements according to the present invention;

Figs. 12(a), (b) and (c) are circuit diagram and perspective views, showing various embodiments of the terminal block;

Fig. 13 is a perspective view showing a composite-module type sequence control element according to another embodiment of the present invention;

Fig. 14 is a perspective view of the essential portions thereof;

Figs. 15 and 16 are views showing examples of circuits of the composite-module; and

Fig. 17 is a circuit diagram showing another embodiment of the sequence controller according to the present invention.

- 4 -

BEST MODE FOR CARRYING OUT THE INVENTION

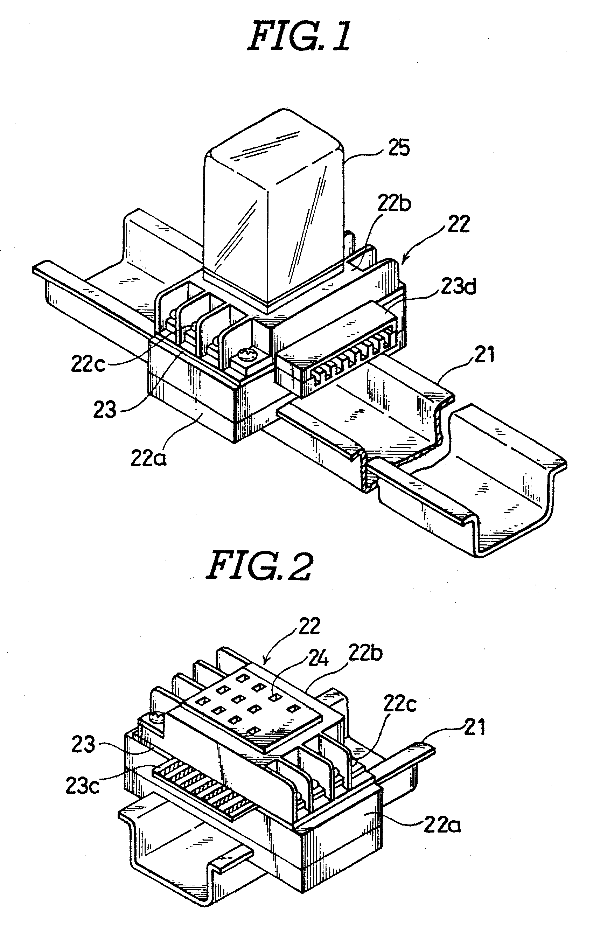

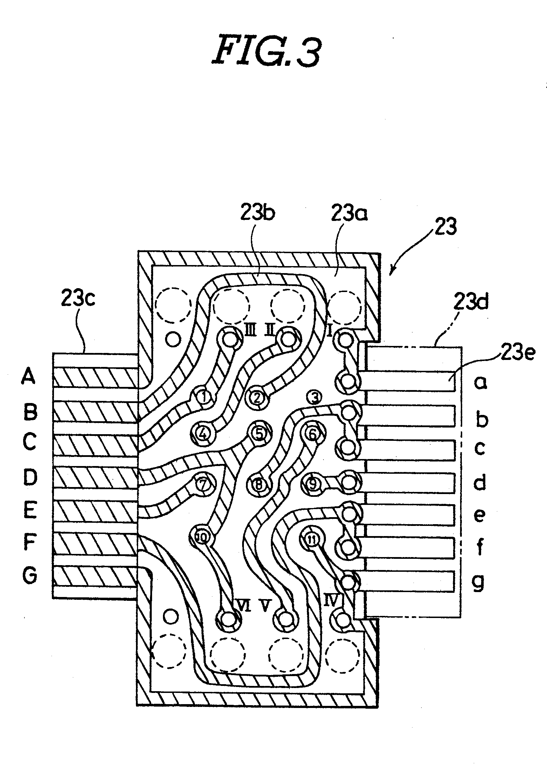

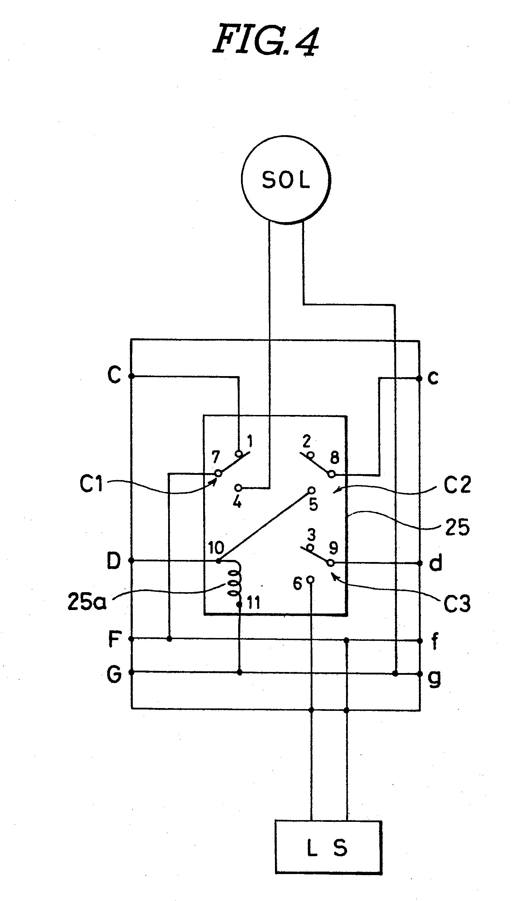

Fig. 1 is the perspective view showing one embodiment of the mono-module type sequence control element according to the present invention, Fig. 2 is the perspective view of the essential portions thereof, Fig. 3 is the enlarged plan view showing the circuit board thereof, and Fig. 4 is the diagram showing the principle of the mono-module type sequence control element according to the present invention.

As shown in Figs. 1 to 3, the mono-module type sequence control element in this embodiment comprises: a base 22a of a socket 22, which is inserted and secured through a groove formed on the undersurface thereof onto a rail 21 for mounting the element; a relay mounting member 22b connected onto the base 22a through screws and the like, onto which is detachably mounted a relay element; a circuit board 23 interposed between the base 22a and the relay mounting member 22b; and an electromagnetic relay 25, such for example as a triple pole C contact, which is detachably mounted to pin insertion holes 24 of the relay mounting member 22b through pin insertions. Designated at 22c is a terminal board for connecting input and output signals, which is integrally formed on the socket 22.

The base 22a and the relay mounting member 22b of said socket 22 are formed of molded pieces made of a resin material.

As detailedly shown in Fig. 3, said circuit board 23 is constructed such that a circuit pattern 23b of a basic circuit for a predetermined sequence control is formed on a printed circuit board 23a, and, to make connection to other sequence control elements, the circuit blard 23 is projectingly provided at one side thereof with an male connector 23c and mounted at the other side opposite to said one side with contact pieces 23e of a female connector 23d. More specifically, in Fig. 3, respective connecting terminals indicated by large alphabet characters A to G of the male connector 23c are associated with respective connecting termianls indicated by small alphabet characters a to g of the female connector 23d. In consequence, when the male connector 23c of one sequence control element is inserted into the female connector 23d of another sequence control element, the connecting terminal A is connected to the connecting terminal a, B to b, C to c, D to d, E to e, F to f and G to g.

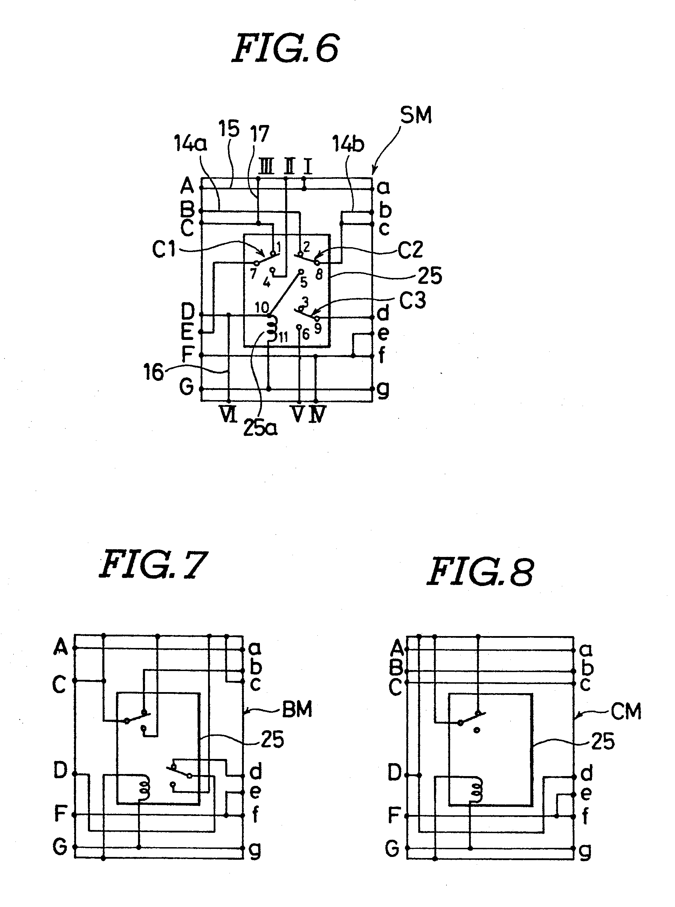

Various circuit patterns 23b of the circuit board 23 may be formed. For example, the circuit pattern 23b shown in Fig. 3 is one belonging to a sequence control elment SM shown in Fig. 6 out of the mono-module type ones. This circuit pattern 23b is of such an arrangement that tht circuit diagram of the principle in

- 6 -

Fig. 4 is added thereto with necessary functions required for working, which will be described hereunder, to thereby obtain the circuit diagram shown in Fig. 6.

Firstly, description will be given of the principle of operation of the sequence control element according to the present invention. In the circuit diagram of the principle as shown in Fig. 4, an electromagnetic relay 25 has a three-pole C contact type construction, wherein a relay contact C1 includes contacts 1, 4 and 7, a relay contact C2 includes 2, 5 and 8, a relay contact C3 includes 3, 6 and9, and a solenoid 25a is provided at opposite sides thereof with contacts 10 and 11. Furthere-more, a sequence control element is connectead at the input side thereof with a limit switch LS and at the output side thereof with a solenoid valve SOL or the like.

In this sequence control element, when a voltage is applied to a terminal D, the solenoid 25a is excited, whereby the three relay contacts C1, C2 and C3 are switched from the contacts 1, 2 and 3 as shown, to the contacts 4, 5 and 6 due to the electromagnetic attracting action of the solenoid.

In consequence, the voltage applied to a terminal F is passed through the contact 7 to the contact 4 of the relay contact C1 and supplied to the solenoid valve SOL as an actuating signal. Terminals G - g constitute a return circuit. With this arrangement, the solenoid

- 7 -

valve SOL is actuated. In this case, the contact 7 is switched from the contact 1 to the contact 4, whereby an actuating signal given to the preceding step disappears.

On the other hand, the contact 2 is disconnected from the contact 8 in the relay contact C2, and the contacts 5 and 8 are connected to the contact 10, whereby an actuating signal is given from the succeeding step to hold the solenoid 25a excited.

Furthermore, the contact 3 is disconnected from the contact 9 in the relay contact C3, and the contact 6 is connected to the contact 9 therein. In consequence, the limit switch LS is connected to the terminal d through the contacts 6 and 9, whereby the limit switch LS is brought into a state where it can deliver an actuating signal to the succeeding step, i.e. a state of waiting for a command from the limit switch LS.

This mono-module type sequence control element may be detachably connected to another mono-module type sequence controlling element or other type elements through the connectors 23c and 23d, so that a sequence controller having desired control functions can be formed.

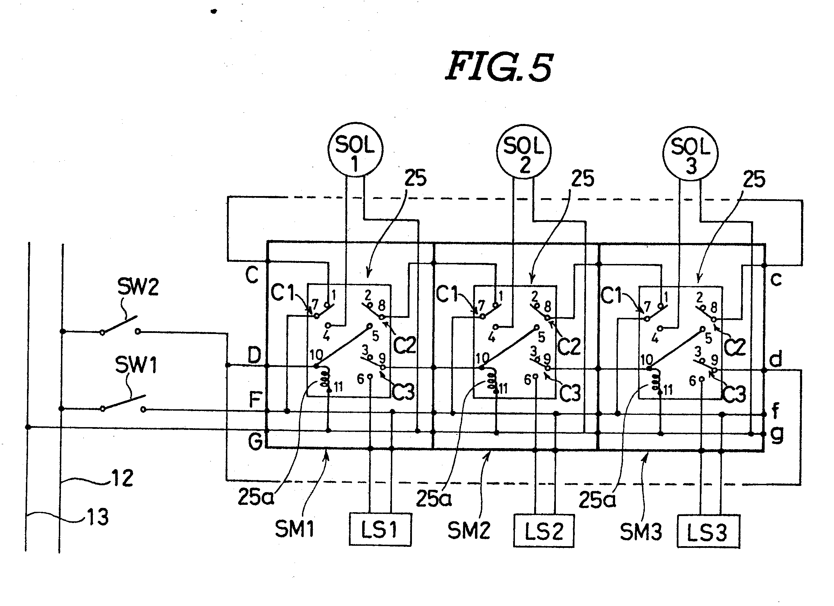

Fig. 5 is the circuit diagram showing the principle of operation of one embodiment of the sequence controller, wherein a plurality of mono-module type sequence control elements shown in Fig. 4 are connected to one another, according to the present invention.

This sequence controller shows the principle of operation in an example where three sequence elements SM1, SM2 and SM3, each of which is identical with the one shown in Fig. 4 are detachably connected to one another. In Fig. 5, designated at 12 and 13 are power lines, SW1 is a power switch and SW2 is a starting switch.

In the circuit diagram of the principle shown in Fig. 5, when the starting switch SW2 is turned ON to excite the solenoid 25a of the sequence element SM1 in a state where the power switch SW1 is turned ON, connections of the contacts 7, 8 and 9 in the three relay contacts C1, C2 and C3 are switched from the contacts 1, 2 and 3 to the contacts 4, 5 and 6.

With this arrangement, an electric current from the power line 12 is passed through the terminal F, the contacts 7 and 4 in the relay contact C1, supplied to a soleniod valve SOL1; and returns to the power line 13 through the terminal G. As the result, the solenoid valve SOL1 is actuated. In this case, since the contact 1 of the relay contact C1 is switched open, a signal to the terminal C is cut off. In other words, an actuating signal to the sequence element SM3 as being the preceding step of the sequence element SM1 is caused to disappear. More specifically, delivery of an input signal to the sequence element SM1, which is the current step, immediately generates an output signal, whereby the solenoid

- 9 -

valve SOL1 is actuated and the output signal in the preceding step is caused to disappear.

On the other hand, the contact 5 is connected to the contact 8 in the relay contact C2, passed through the contacts 1 and 7 of the succeeding sequence element SM2, and further, passed through the power switch SW1 being ON from the terminal F and connected to the power line 12, whereby the continuity is achieved to the contact 10 of the sequence element SM1, so that, even if the starting switch SW2 is turned OFF, the solenoid 25a is held excited.

Furthermore, the contact 6 is connected to the contact 9 in the relay contact C3, whereby the continuity is achieved from the limit switch LS1, through these contacts 6 and 9, and to the solenoid 25a of the succeeding sequence element SM2. More specifically, such a state is brought about that an actuating signal may be given from the limit switch LS1 to the succeeding step, i.e. a state of waiting for a command signal.

In consequence, when the limit switch LS1 of the sequence element SM1 is actuated, a signal therefrom can excite the solenoid 25a of the sequence element SM2 as being the succeeding step. With this arrangement, similarly to the case of the aforesaid sequence element SM1, the three relay contacts C1, C2 and C3 of the sequence element SM2 are switched, whereby a solenoid valve SOL2 is immediately actuated, an acutating signal from the sequence element SM1 as being the preceding step is caused to disappear, and there is brought about a state of waiting for a command signal from the limit switch LS2 to actuate the sequence element SM3 as being the succeeding step.

As described above, the three sequence elements SM1, SM2 and SM3, which are sequentially connected to one another, are successively actuated, thus enabling to operate in sequence.

In other words, the sequence elements SM1, SM2 and SM3 can obtain output signals to input signals, respectively, cause an output from the preceding step to disappear, and prepare for receiving an input to the succeeding step, so that a perfect interlock in a sequence controller can be achieved.

In forming the sequence controller in this embodiment, the male connectors 23c of the respective sequence control elements are inserted into the female connectors 23d in single movement to achieve detachable connections, so that this sequence controller can be very easily made.

Fig. 6 is a circuit diagram showing another emboidment, wherein functions necessary for working are added to the circuit of the principle of the mono-module type sequence control element according to the present invention as shown in Fig. 4.

- 11 -

Connecting terminals A to G and a to g, wiring terminals I to VI and relay terminals 1 to 11 as shown in Fig. 6 are identical with the connecting terminals, the wiring terminals and the relay terminals as shown in Fig. 3.

In the circuit shown in Fig. 6, the terminal D is one for receiving a signal from the starting switch SW2 or a signal from the element in the preceding step, and, when a signal is applied to this terminal D, the solenoid 25a of the electromagnetic relay 25 is excited, and all of the three relay contacts C1, C2 and C3 are switched from the state as shown.

Furthermore, in Fig. 6, the terminals I and II are connectable thereto with a solenoid valve for example, and the terminals IV and V are connectible thereto with a limit switch for example.

In the circuit shown in Fig. 6, there is added the following functions useful for the working in order to improve and stabilize the functions obtained by the circuit of the principle shown in Fig. 4.

Firstly, in the circuit shown in Fig. 6, there are provided a wiring 14a connecting the terminal B to the contact 2 and another wiring 14b connecting the contact 8 to the terminal b, so that an operation failure caused by a time difference between the movement of contacts between the two relay contacts C1 and C2 can be reliably compensated and the reliable operation of circuit can be performed.

Secondly, a wiring 15 connecting the terminal A to the terminal a is provided, whereby, during the progress of a sequence operation, when a dwell is required, the wiring 15 can be opened to stop the current step only, so that a safe operation can be secured.

Thirdly, a wiring 16 connecting the terminal VI is provided on a wiring connecting the terminal D to the contact 10, so that the sequence controller can be individually operated from the outside and, for example, the sequence controller can be started from the midway of the sequence. With this arrangement, the sequence controller can be controlled more conveniently.

Fourthly, a wiring 17 connecting the output terminal III is provided on a wiring connecting the terminal C to the contact 1, whereby, when the output terminal II is turned ON to output, the terminal III is turned OFF, and, when the terminal II is turned OFF, the terminal III is turned ON, so that, by use of this wiring 17, an output signal reverse to an actuating signal of the sequence can be taken out. Deversified control of controller's subjects is possible through the utilization of this wiring 17.

Fifthly, the provision of the terminal E makes it possible to take a signal for the relay contact C1 from the terminal e in the preceding step, so that the

- 13 -

provision can be useful in achieving complicated sequence controls using branch circuits and the like.

As described above, the basic circuit shown in Fig. 6 makes it possible to realize the sequence functions improved and stabilized. Furthermore, the additional functions described above can be obtained independently of one another, and therefore, a simple function or combined functions, which are useful for working, can be obtained.

Additionally, the circuit pattern 23b of the circuit board 23 is diversified as shown in Figs. 7 to 12 for example, in accordance with the types of the mon-modules.

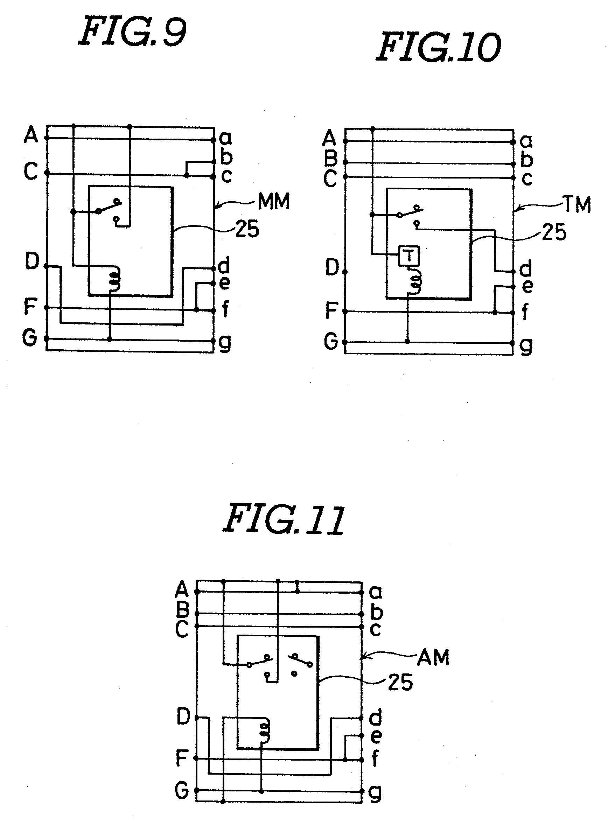

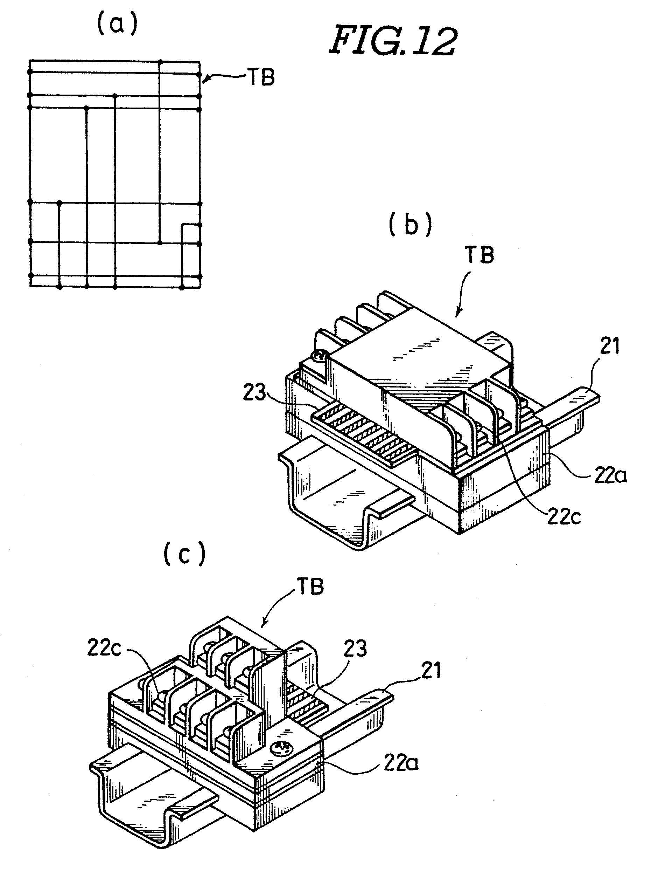

Fig. 7 shows a branch element BM for branching the sequence, Fig. 8 shows a combining element CM for combining the sequences, Fig. 9 shows a memory element MM having a memory function, Fig. 10 shows a timer element TM having a timer function, Fig. 11 shows an AND element AM having an AND function, and Fig. 12(a) shows one of terminal blocks TB disposed at opposite ends of a sequence. Figs. 12(b) and (c) are perspective views showing appearances of two examples of the terminal block TB, Fig. 12(b) showing the terminal board 22c provided in a direction perpendicular to the longitudinal direction of the mounting rail 21, and Fig. 12(c) showing the terminal board 22c provided in the longitudinal direction of the mounting rail 21. Furthermore, the terminal block TB can be formed to be fitted with a female connector 23d as well as a male connector 23c. The electromagnetic relay 25 cannot be connected only to the terminal block TB, however, can be detachably connected to other elements. In this case, the same electromagnetic relay 25 and the same socket can be used.

In consequence, selection of variously different circuit patterns 23b of the circuit board 23 makes it possible to form module-type sequence control elements having variously different functions.

Additionally, as an electromagnetic relay 25, any one of three-pole C contact relays on the market for example may be used, so that description of the detailed construction thereof will not be given in this specification.

According to this embodiment, only by the change of the circuit pattern 23b of the circuit board 23, various elements having various functions as exemplified in Figs. 6 to 11 can be obtained, and moreover, between these elements the male connectors 23c are inserted and connected to female connectors 23d on the mounting rail 21, respectively, whereby the sequence controller having a desired characteristics and comprising a desired number of elements may be formed in single movement, so that complicated and troublesome wirings and wire connecting work thereof can be dispensed with.

- 15 -

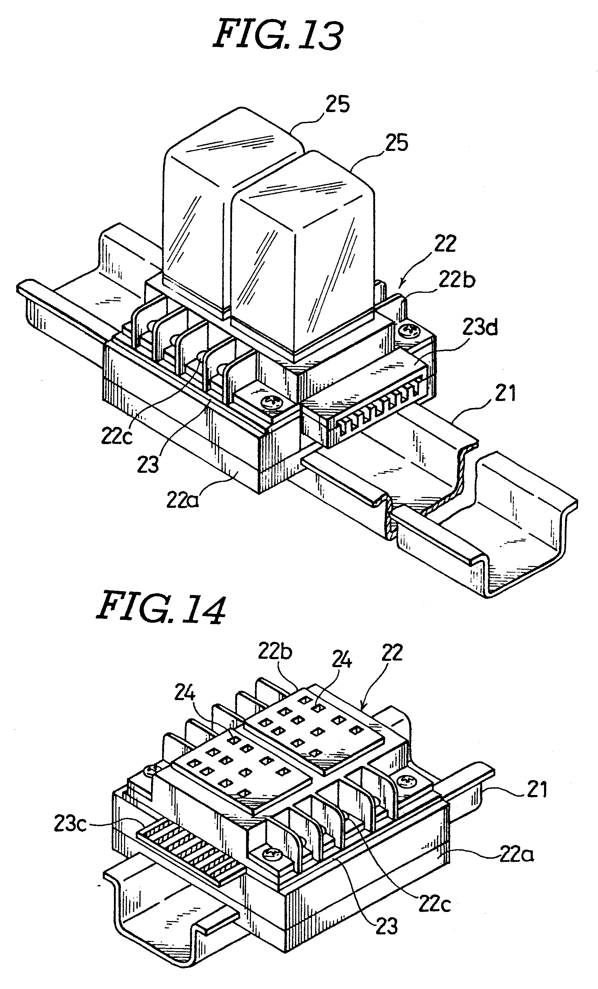

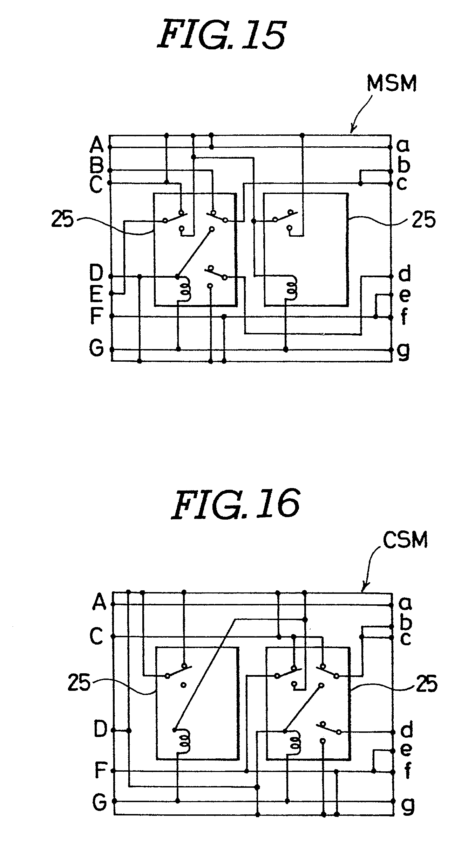

Fig. 13 is a perspective view showing another embodiment of the composite-module-type sequence control elements according to the present invention, Fig. 14 is a perspective view of the essential portions thereof, and Figs. 15 and 16 are views showing the examples of circuits of the composite-modules.

The composite-module in this embodiment is a two stage module having functions obtained by combining mono-modules as shown in Figs. 7 to 11. Therefore, to provide an electromagnetic relay 25 for each function, there are formed two sets of pin insertion holes for mounting the relay.

Furthermore, the circuit pattern 23b of the circuit board 23 is formed by combining circuit patterns for the mono-module.

For example, the element shown in Fig. 15 is the sequence element MSM having a memory, the left portion thereof in the drawing having a sequence function and the right portion thereof having a memory function.

Additinally, the element shown in Fig. 16 is the sequence element CSM having the combined circuits, the left portion thereof in the drawing having the combining function  and the right portion thereof having the sequence function.

The composite module in this embodiment can obtain the composite functions inexpensively by itself, and can

- 16 -

form a desired sequence controlller by combining a composite module with another or with a mono-module, in single movement.

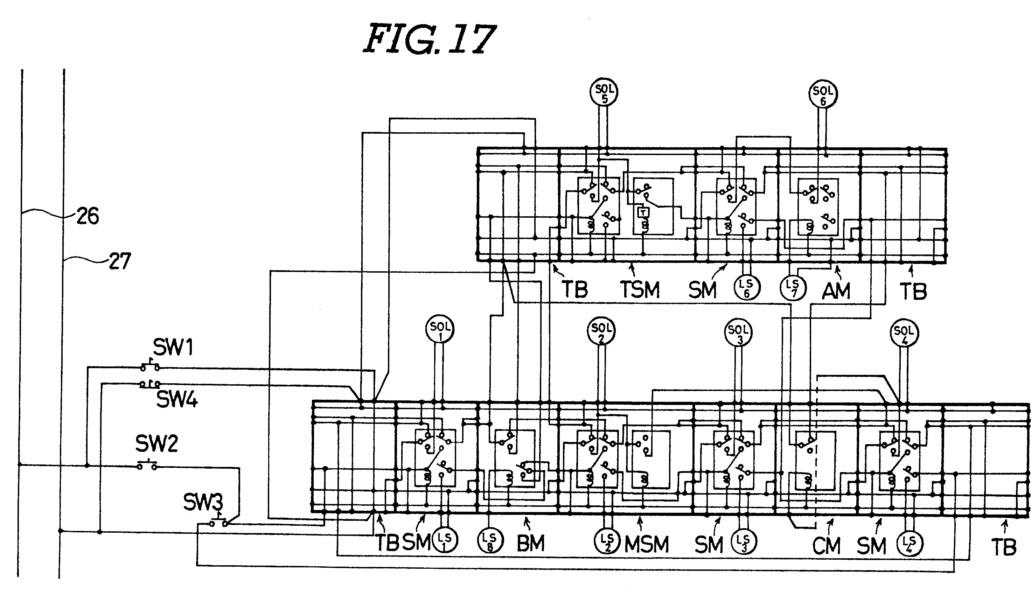

Fig. 17 is the circuit diagram showing another embodiment of the sequence controller according to the present invention.

This sequence controller is formed by combining mono-modules such as shown in Figs.7 to 12 and composite-modules such as shown in Figs. 15 and 16 with each other so as to be programmed to provide desired sequence control functions.

More specifically, the sequence controller in this embodiment comprises four sequence elements SM, a branch element BM, a sequence element MSM with a memory, a combining element CM, and AND element AM, a sequence element TSM with a timer and four terminal blocks TB. Furthermore, designated at LS1 to LS8 are limit switches as being inputs and SOL1 to SOL6 solenoid valves as being outputs.

In forming the sequence controller in this embodiment, the male connectors 23c are inserted in single movement into the female connectors 23d so as to detachably connect the sequence control elements to others, so that the sequence controller can be made very easily.

In Fig. 17, denoted at 26 and 27 are power lines, SW1 a power switch, SW2 a starting switch for the sequence, and SW3 a cycle selecting switch for selecting single predetermined cycle or recurring cycles, whereby, when the switch SW3 is opened, the sequence controller is stopped in operation by one cycle, and, when the switch SW3 is closed, the sequence controller repeats the cycles. Designated at SW4 is a dwell switch, whereby, when the switch SW4 is opened, the sequence controller stops in operation on the spot, and, when the switch SW4 is closed, the sequence controller starts its operation on the spot.

Additionally, the present invention need not necessarily be limited to the above-described embodiments, and various modifications may be obtained.

For example, the socket may be formed in one-block structure of a resin molding incorporating therein a predetermined circuit board.

Furthermore, a mono-module or a composite-module may have a circuit arrangement other than the above, and a composite-module having three or more stages may be provided.

The present invention can offer the following outstanding advantages.

(1) The sequence control elements significantly simplified in construction and low in costs, and the sequence controller using the said elements can be obtained.

(2) An element having various sequence control functions can be obtained with the main body of the element being commonly used and only the circuit board being selectively changed.

(3)  A sequence controller can be obtained by connecting one sequence control element to another in single movement without requiring any special knowledge of circuitry and skill.

(4)  A sequence controller having desired sequence control functions can be obtained by combining desired elements together owing to above item (3).

(5)  Complicated wirings and troublesome wire connecting works for connecting the elements to each other can be dispensed with owing to above item (3).

(6)  Even if a trouble occurs, it suffices to replace the element in trouble with a new one.

(7)  A desired sequence controller can be programmed by use of a required number of elements, so that the elements can be unwastefully used and the cost per output can be decreased.

(8)  The sequence control element or elements constituting the sequence controller can cause an output of the element in the preceding step to disappear and prepare for receiving an input to the element in the succeeding step, so that a perfect interlock in the sequence controller can be achieved.

(9)  As the relays, ones on the market can be used, so that the relays can be easily assembled to the board and the cost can be decreased.

(10)   As compared with the case of the programmable
controller, electric clutter and interference can be
prevented and reliable sequence control can be achieved.

(11)   A highly complicated circuit can be formed by
combining the elements together.

(12)   Since the operation is performed electrically, the
present invention can be additionally used for the
sequence control of electric components such as a motor
and a lamp.

(13)   An operating circuit can  be formed by use of at
least two elements, and the inputs and outputs do not
interfere with each other, so that it suffices to use only
a few OR elements in particular, and the cost of the
sequence controller as a whole can be decreased to a
considerable extent.

The outputs do not interfere with each other, so
that it suffices to use only a few OR elements in particular, and the cost of the sequence controller as a whole
can be decreased to a considerable extent.


INDUSTRIAL APPLICABILITY

The sequence control element according to the
present invention and the sequence controller using the
said element can be widely applied to automatic processing
machines such as an automatic press machine and a drilling
machine, or other automatic conveying machines and so forth.

CLAIMS:

1.      A sequence control element comprising:

a board formed thereon with a basic circuit for a predetermined sequence control;

a relay element detachably connectible to the basic circuit of said board; and

connectors connected to the basic circuit of said board and detachably connectible to other sequence control elements.

2.      A sequence controller using a plurality of sequence control elements each comprising: a board formed thereon with a basic circuit for a predetermined sequence control; a relay element detachably connectible to the basic circuit of said board; and connectors connected to the basic circuit of said board and detachably connectable to other sequence control elements;
wherein said plurality of sequence control elements are detachably connected to one another through said connectors on mounting means.

3.      A sequence controller as set forth in claim 2, characterized in that each of said sequence control elements causes an output in the preceding step to disappear and prepares for delivering an input to the succeeding step.

- 21 -

## FIG.1

## FIG.2

# FIG.3

FIG.4

# FIG.5

## FIG.6

## FIG.7

## FIG.8

# FIG.9

# FIG.10

# FIG.11

(a)

FIG.12

TB

(b)

TB

23

21

22a

22c

(c)

TB

22c

23

21

22a

0191865

## FIG.13

## FIG.14

**FIG. 15**

**FIG. 16**

# FIG.17

# INTERNATIONAL SEARCH REPORT

International Application No. PCT/JP85/00427

**I. CLASSIFICATION OF SUBJECT MATTER** (if several classification symbols apply, indicate all) [2]

According to International Patent Classification (IPC) or to both National Classification and IPC

Int. Cl⁴ G05B 19/02

**II. FIELDS SEARCHED**

Minimum Documentation Searched [4]

| Classification System | Classification Symbols |
|---|---|
| IPC | G05B 19/00 - 19/42 |

Documentation Searched other than Minimum Documentation
to the Extent that such Documents are Included in the Fields Searched [5]

| | |
|---|---|
| Jitsuyo Shinan Koho | 1926 - 1984 |
| Kokai Jitsuyo Shinan Koho | 1971 - 1984 |

**III. DOCUMENTS CONSIDERED TO BE RELEVANT** [14]

| Category* | Citation of Document, [16] with indication, where appropriate, of the relevant passages [17] | Relevant to Claim No [18] |
|---|---|---|
| Y | US, A, 3,881,114 (Rodolfo. D. Ferrari) 29 April 1975 (29. 04. 75) (Family: none) | 1-3 |
| Y | JP, A, 48-41179 (Daniel Bouteille) 16 June 1973 (16. 06. 73) & US, A, 3,875,959 & DE, C3, 2,247,993 & FR, B1, 2,154,372 | 1-3 |
| Y | JP, U, 54-45891 (Hitachi, Ltd.) 29 March 1979 (29. 03. 79) (Family: none) | 1-3 |
| Y | JP, U, 52-29251 (Osaka National Denshi Keisoku Kabushiki Kaisha) 1 March 1977 (01. 03. 77) (Family: none) | 1-3 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance, the claimed invention cannot be considered novel or cannot be considered to involve an inventive step

"Y" document of particular relevance, the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report |
|---|---|
| October 16, 1985 (16.10.85) | October 21, 1985 (21.10.85) |

| International Searching Authority | Signature of Authorized Officer [20] |
|---|---|
| Japanese Patent Office | |

Form PCT ISA 210 (second sheet) (October 1981)